# EUROPEAN PATENT APPLICATION

(11) **EP 3 348 882 A1**
(43) Date of publication of application: **18.07.2018**
(21) Application number: 16844250.7
(22) Date of filing: 31.08.2016
(51) Int. Cl.: F16J 15/20, G03G 15/00, G03G 15/08

(54) **SEALING MATERIAL AND SEALING MECHANISM**

(30) Priority: 09.09.2015 JP 2015177201
(71) Applicant: Nitta Corporation, Osaka-shi, Osaka 556-0022 (JP)
(72) Inventor: DEI, Takehito, Yamatokohriyama-shi Nara 639-1085 (JP); YAMADA, Mitsuhiro, Yamatokohriyama-shi Nara 639-1085 (JP); ISHIZAKI, Yoji, Yamatokohriyama-shi Nara 639-1085 (JP); AOKI, Kenichiro, Yamatokohriyama-shi Nara 639-1085 (JP); AOKI, Yasuhiro, Yamatokohriyama-shi Nara 639-1085 (JP)
(74) Representative: Viering, Jentschura & Partner mbB Patent- und Rechtsanwälte
(86) International application number: PCT/JP2016/075501
(87) International publication number: WO 2017/043389

(57) **Abstract**

A sealing material 10 for sealing between a hole 21 of a structure 20 and a shaft 30 inserted into the hole 21. The sealing material 10 includes a sliding layer 11 and an elastic integument layer 12. The sliding layer 11 has a ring shape or cylindrical shape whose inner peripheral surface slides with the shaft 30 during movement of the shaft 30 relative to the structure 20. The sliding layer 11 has a fiber and an elastomer integrated with each other. The elastic integument layer 12 is laminated on an outer peripheral surface side of the sliding layer 11, and has a porous structure.

## Description

### TECHNICAL FIELD

The present invention relates to a sealing material and a sealing mechanism for the purpose of preventing leakage and scattering of powder, such as toner.

### BACKGROUND ART

In order to prevent the leakage of powder by sealing a rotary shaft in an image processing apparatus using powder, such as toner, Patent Document 1 discloses a cylindrical sealing member formed by bringing a pile or fiber sheet into a cylindrical shape, and restraining an outer peripheral side thereof with a metal support member. The cylindrical sealing member keeps a balance between sliding resistance and sealing property by pressing, through the pile or fiber, the outer periphery of the shaft at an appropriate compression force.

However, the cylindrical sealing member has the following problems. That is, the pile or fiber has low durability, and the sealing property is lowered due to accumulation of the powder between the piles or fibers. The sealing material is prone to deformation when a high pressure is applied from the outer periphery in order to enhance the sealing property. It is therefore difficult to apply to apparatuses used under high load over a long period of time.

### PRIOR ART DOCUMENT

Patent Document 1: Japanese Unexamined Patent Publication No. 2008-26728

### SUMMARY OF THE INVENTION

### PROBLEMS TO BE SOLVED BY THE INVENTION

The present invention aims at providing a highly durable sealing material having both low sliding resistance and high sealing property, as well as a sealing mechanism capable of relaxing an external compression force.

### MEANS FOR SOLVING THE PROBLEMS

The inventors of the present application have completed the present invention as a result of intensive studies for solving the above problems. Specifically, a sealing material of the present invention is the sealing material for sealing between a hole of a structure and a shaft inserted into the hole. The sealing material includes a sliding layer and an elastic integument layer. The sliding layer has a ring shape or cylindrical shape whose inner peripheral surface slides with the shaft during movement of the shaft relative to the structure. The sliding layer has a fiber and an elastomer integrated with each other. The elastic integument layer is laminated on an outer peripheral surface of the sliding layer, and has a porous structure.

### EFFECTS OF THE INVETION

The sealing material of the present invention is made up of the elastic material having, on the inner peripheral surface side, the sliding layer in which the fiber and the elastomer are integrated with each other. Therefore, the sealing material has high sealing property and excellent durability.

Additionally, because the elastic integument layer disposed close to the outer peripheral surface of the sliding layer has the porous structure, it is possible to relax the external compressive force on the shaft, thereby achieving an appropriate sliding torque.

### BRIEF DESCRIPTION OF THE DRAWINGS

FIG. 1 is a schematic sectional view showing a sealing material and a sealing mechanism according to an embodiment of the present invention;
FIG. 2 is a schematic sectional view showing a sealing mechanism according to another embodiment of the present invention;
FIG. 3 is an explanatory drawing showing a sealing property test method for the sealing material; and
FIG. 4 is an explanatory drawing showing a torque test method for the sealing material.

### EMBODIMENTS FOR CARRYING OUT THE INVENTION

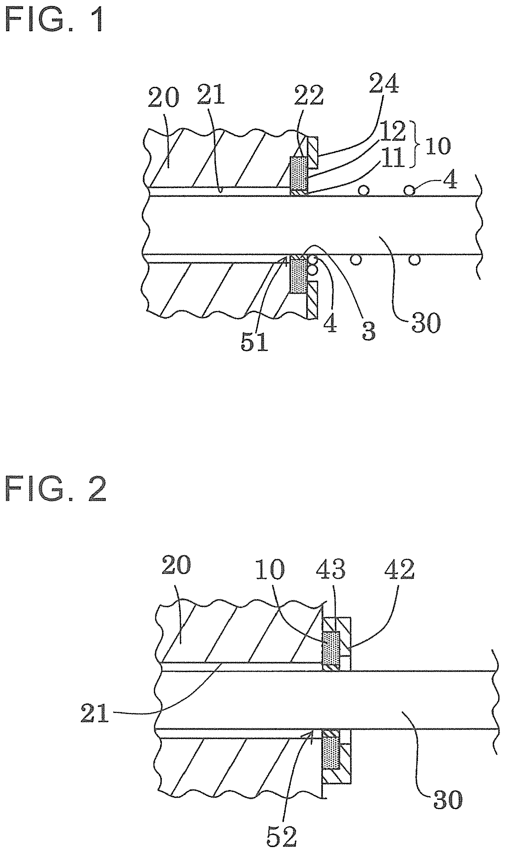

FIG. 1 shows a sealing material 10 according to an embodiment of the present invention. The sealing material 10 has a ring shape, and has, at a middle part thereof, a shaft insertion hole 3 that permits insertion of a shaft 30. A sliding layer 11 and an elastic integument layer 12 are laminated in this order and integrated with each other around the shaft 30 toward an outer periphery thereof.

As shown in FIG. 1, the sealing material 10 is interposed between an inner peripheral surface of a sealing material accommodating recess 22 formed at an inlet of a hole 21 of a structure 20, namely, a shaft insertion port 51, and an outer peripheral surface of the shaft 30 inserted through the sealing material accommodating recess 22. The sealing material 10 seals the outer peripheral surface of the shaft 30 that makes rotational motion around its own axis or makes axial reciprocating motion. The shaft 30 is inserted through the sealing material accommodating recess 22 into the hole 21 of the structure 20. Specifically, the sealing material accommodating recess 22 communicates with the hole 21, and has an inner diameter larger than a diameter of the hole 21.

The sealing material 10 is suitably adjusted according to the shape and size of the shaft 30 described later, in order to ensure that a gap is less likely to occur between the inner peripheral surface of the shaft insertion hole 3 and the outer peripheral surface of the shaft 30 during operation of the shaft 30.

The sliding layer 11 of the sealing material 10 is intended to seal the outer peripheral surface of the shaft 30 as shown in FIG. 1. The sliding layer 11 is made up of fiber and an elastomer which are integrated with each other. This contributes to reducing sliding resistance of the shaft 30 subjected to contact, thereby leading to the sealing material with excellent durability against sliding friction.

The elastomer constituting the sliding layer 11 is mainly intended to improve durability of the fiber. Examples of the material of the elastomer include elastomers, such as natural rubber, nitrile rubber, chloroprene rubber, hypalon, polybutadiene rubber, ethylene-propylene rubber (EPM), ethylene-propylene-diene rubber terpolymer (EPDM), hydrogenated acrylonitrile butadiene rubber (H-NBR), silicone rubber, fluoro rubber, acryl rubber, styrene butadiene rubber, chlorinated polyethylene rubber, millable urethane, thermosetting polyurethane, thermoplastic polyurethane, and thermoplastic polyester. One or more kinds of these are usable. A vulcanizing agent, a vulcanization accelerator, and a reinforcing agent may be blended with the elastomer constituting the sliding layer 11. Examples of the vulcanizing agent include organic peroxides, such as dicumyl peroxide, organic sulfur compounds, and metal oxides. Examples of the vulcanization accelerator include fatty acids, such as stearic acid, and metal oxide. Examples of the reinforcing agent include carbon black, and white carbon. Further, for example, an anti-aging agent, a filler, plasticizer, and pressure sensitive adhesive may be blended. Besides these, a solid lubricating agent, such as graphite, silicone oil, fluorine powder, and molybdenum disulfide, may be contained in the elastomer.

The fiber constituting the sliding layer 11 is mainly intended to be brought into contact with and slides along the outer peripheral surface of the shaft 30, and the fiber becomes a main factor reducing the sliding resistance around the shaft 30.

Examples of the material of the fiber constituting the sliding layer 11 include nylon fiber, aramid fiber, polyester fiber, carbon fiber, Teflon (registered trademark) fiber, liquid crystal polymer fiber, glass fiber, and cotton thread. Alternatively, the fiber constituting the sliding layer 11 may be in the form of a fabric material, or the fiber in the form of short fibers may be mixed with the elastomer. Examples of the fabric material include woven fabric, knitted fabric, and nonwoven fabric. Although a basis weight of the fabric material is usually 20-200 g/m², no particular limitation is imposed thereon.

When the fiber form is a fabric material, the fabric material and the elastomer are integrated with each other so that the fabric material is brought into sliding contact with the outer peripheral surface of the shaft 30. In the form of short fibers, the sliding layer 11 is obtainable by mixing the short fibers into the elastomer, followed by integral formation.

The elastic integument layer 12 has a porous structure. The elastic integument layer 12 is obtainable by incorporating, for example, a foaming agent into an elastomer material, followed by so-called foaming and crosslinking in which foaming occurs at the same time as vulcanization by heating under pressure. As an elastomer material used, an elastomer material similar to that for the sliding layer 11 is usable. It is particularly preferable to use the same elastomer material as that for the sliding layer 11 for the purpose of being integrated with the sliding layer 11.

As the foaming agent used for the elastic integument layer 12, any of ones which have been conventionally used for foaming of elastomers. There are, for example, sodium hydrogen carbonate, ammonium carbonate, diazo amino benzene, N,N'-dinitroso pentamethylene tetramine, and azodicarbonamide. As other additives, such as vulcanizing agent, materials similar to those for the sliding layer 11 are usable.

An addition amount of the foaming agent needs to be adjusted so that an obtainable elastic integument layer 12 has sufficient hardness and density for the purpose of relaxing the pressure exerted on the sealing material and reducing a sliding torque. Specifically, the hardness (rubber hardness) of the elastic integument layer 12 is 50-90 Hs, preferably approximately 60-70 Hs measured by type A durometer according to JIS K6253. The density of the elastic integument layer 12 is 1.0-1.4 kg/m3, preferably approximately 1.1-1.2 kg/m³.

The addition amount of the foaming agent is 0.1-10% by mass, preferably 0.3-3.0% by mass relative to a total amount of the elastomer.

No particular limitation is imposed on a radial thickness of each of the sliding layer 11 and the elastic integument layer 12. The radial thickness needs to be suitably adjusted according to, for example, the purpose of use of the sealing material 10. However, a ratio of the radial thickness of the sliding layer 11 and the radial thickness of the elastic integument layer 12 having the porous structure is preferably 1:10 to 1:30 for the purpose of relaxing external compressive force exerted from the sealing material 10 lying along the outer periphery to the shaft 30.

The sealing material 10 has a ring shape or cylindrical shape. A length of the sealing material 10 along an axial direction of the shaft 30 is not particularly limited, but the length usually needs approximately 0.5-10 mm.

A shape of the shaft insertion hole 3 of the sealing material 10 is determined according to the shape of the shaft 30. A cross-sectional form of the shaft 30 may be, for example, a circle, square, or polygonal form. Alternatively, the shaft 30 may have a screw groove (not shown) formed on an outer surface thereof. In this case, an inner peripheral surface of the shaft insertion hole 3 of the sliding layer 11 is preferably provided with a screw groove being engageable with the screw groove of the shaft 30 for the purpose of ensuring sealing property.

A method of manufacturing the sealing material 10 according to the present invention is not particularly limited. For example, the method includes winding a fiber (fabric material) being impregnated with an elastomer for forming the sliding layer, around a bar-shaped object having a shape similar to the outer peripheral surface of the shaft 30, then winding, around an outer surface thereof, an elastomer for forming the elastic integument layer containing a foaming agent. The method further includes holding this between upper and lower metal molds capable of molding into a desired sealing material 10, followed by bonding by heating under pressure while simultaneously causing foaming of the elastomer for forming the elastic integument layer. Thereafter, the sealing material 10 is obtainable by taking a molded product out of the metal molds, and then cutting the molded product in a necessary thickness.

Alternatively, the sealing material 10 is also manufacturable with a metal mold forming method. That is, a fabric material being impregnated with an elastomer for forming the sliding layer is wound around a bar-shaped object having a shape similar to the outer peripheral surface of the shaft 30. This is then held between metal molds. Subsequently, a flowable elastomer for forming the elastic integument layer containing a foaming agent is poured into the metal molds. This is heated under pressure and then taken out of the metal molds.

As a process of impregnating a fabric material with an elastomer, it is suitable to employ a method in which the elastomer is dissolved into a liquid state with a solvent or the like, and the fabric material is impregnated with the elastomer. With the process of impregnating the fabric material with the elastomer, the elastomer enters between the fiber materials constituting the fabric material. Consequently, the fiber materials constituting the fabric material are collectively bonded to each other, thereby reinforcing the fabric material. By using the fabric material impregnated with the elastomer as the sliding layer, it is possible to reduce wear due to friction between the fiber materials constituting the fabric material, and it is also possible to improve wear resistance between the sliding layer and the shaft.

Instead of the integral formation as described above, the sliding layer 11 and the elastic integument layer 12 having the porous structure may be bonded to each other with an adhesive.

### [Sealing Mechanism]

The sealing material 10 is, for example, disposed and used as shown in FIG. 1. Specifically, after the shaft 30 is inserted into the shaft insertion hole 3 at the middle part of the sealing material 10, the shaft 30 is inserted into the hole 21 of the structure 20, and the sealing material 10 is press-fitted into the sealing material accommodating recess 22 ahead of the hole 21. Subsequently, the sealing material 10 is sealed within the sealing material accommodating recess 22 by attaching the sealing retainer 24 to an outer surface of the structure 20.

Alternatively, the sealing material 10 may be previously press-fitted into the sealing material accommodating recess 22, and the sealing retainer 24 may be attached thereto. Thereafter, the shaft 30 may be inserted into the hole 21 of the structure 20 through the shaft insertion hole 3 of the sealing material 10.

As shown in FIG. 1, the sealing retainer 24 is intended to be fixed to an outer wall surface of the structure 20 by a fastening screw (not shown) after the sealing material 10 externally inserted into the shaft 30 is press-fitted into the sealing material accommodating recess 22, and is attached thereto in a compressed state. The sealing retainer 24 is not particularly limited as long as it can confine the sealing material 10 in the sealing material accommodating recess 22 and can adhere to the structure 20. The sealing material 10 is fixed within the sealing material accommodating recess 22 by the sealing retainer 24, and the sealing material 10 does not separate from the structure 20 even when the shaft 30 is moved.

In cases where the elastic integument layer 12 is a non-foaming body having no porous structure, a pressing force from the sealing retainer 24 is dispersed in multiple directions in the elastic integument layer 12, and the elastic integument layer 12 is susceptible to appearance deformation. In contrast, in cases where the elastic integument layer 12 has the porous structure as in the present embodiment, when the sealing retainer 24 compresses the elastic integument layer 12 upon attachment, void parts (not shown) in the porous structure included in the elastic integument layer 12 deform upon receipt of a pressure from the sealing retainer 24, thus contributing to relaxing an external compression force. The appearance of the elastic integument layer 12 is therefore less likely to be deformed.

Spring effect of improving the porous structure inside the elastic integument layer 12 can be expected. The spring effect makes it possible to press the sliding layer 11 against the shaft 30 when an external pressure of a predetermined value or above is applied to the elastic integument layer 12. This leads to improved sealing property.

When the shaft 30 extending through the sealing material 10 rotates or operates axially, foreign matter 4, such as dust and dirt, may attach to the surface of the shaft 30 as shown in FIG. 1. The surface of the shaft 30 is blocked by a sealing material 10 in order to prevent the foreign matter 4 from entering the hole 21 of the structure 20 on that occasion. Therefore, the foreign matter 4 is collectable toward the sealing material 10 and removable from the shaft 30, thereby making it possible to prevent the foreign matter 4 from entering the structure 20.

With the present embodiment, a front surface of the sealing material 10, from which the foreign matter 4 may enter, is formed vertical to the shaft 30 as shown in FIG. 1. Alternatively, the front surface may be inclined into a slope shape so that an inner peripheral surface side of the sealing material 10 is located more outside the structure 20 than an outer peripheral surface side of the sealing material 10. This is effective in eliminating the foreign matter 4.

### [Other Sealing Mechanism]

FIG. 2 shows a sealing mechanism according to still another embodiment of the present invention. A sealing material 10 is fitted in a compressed state into a sealing material accommodating recess 43 disposed in a sealing retainer 42 located outside a structure 20 in the present embodiment.

As shown in FIG. 2, the sealing retainer 42 is attached to the outside of a shaft insertion port 52 disposed in the structure 20 in the present embodiment. The sealing material accommodating recess 43 is formed on a surface of the sealing retainer 42 which is opposed to the shaft insertion port 52. The shaft insertion port 52 is sealed by interposing the sealing material 10 between an inner peripheral surface of the sealing material accommodating recess 43 and an outer peripheral surface of the shaft 30 inserted into a hole 21 of the structure 20. Specifically, the sealing retainer 42 causes the sealing material 10 externally inserted into the shaft 30 to be press-fitted into the sealing material accommodating recess 43 so as to be compressively deformed. Thereafter, the sealing retainer 42 is secured to an outer wall surface of the structure 20 by a fastening screw or the like. Others are common to the embodiment shown in FIG. 1.

The sealing material and the sealing mechanism of the present invention are suitably usable as a sealing material applied as shaft seal for a shaft, such as rotary shafts for use in, for example, vehicles, such as automobiles, motorbikes, bicycles, amusement vehicles, motorboats, railway vehicles, ships, aircrafts, and spaceships, industrial machines, such as various machines, machine tools, robots, as well as production facilities, image processing apparatuses, semiconductor manufacturing apparatuses, and chip mounters, each of which is easily affected by vibration.

### EXAMPLES

The present invention is described in more detail below by illustrating examples, which however are not intended to limit the present invention.

### (Example)

Firstly, a base rubber (NBR rubber) was subjected to a primary kneading (mastication), and 0.55% by weight of DPT (dinitroso pentamethylene tetramin) was added as a foaming agent to a total amount of the base rubber. This was then subjected to a secondary kneading (kneading) to obtain a raw material rubber for a sealing material.

Subsequently, a cylindrical sealing material was obtained by winding a canvas being impregnated with an elastomer around a bar-shaped object having the same shape as the outer peripheral surface of the shaft 30, and then winding therearound the raw material rubber containing the foaming agent, followed by heating under pressure so as to be fused to the canvas. Thereafter, the sealing material was obtainable by taking this out of metal molds, and then cutting this in a predetermined thickness. Hardness and density of the sealing material are presented in Table 1. The hardness was obtained by measuring the outer peripheral surface of the sealing material 10 with a rubber hardness tester.

### (Comparative Example)

A sealing material was obtained in the same manner as in Example, except that no foaming agent was added to a raw material rubber. Hardness and density of the sealing material are presented in Table 1.

### (Sealing Property Test)

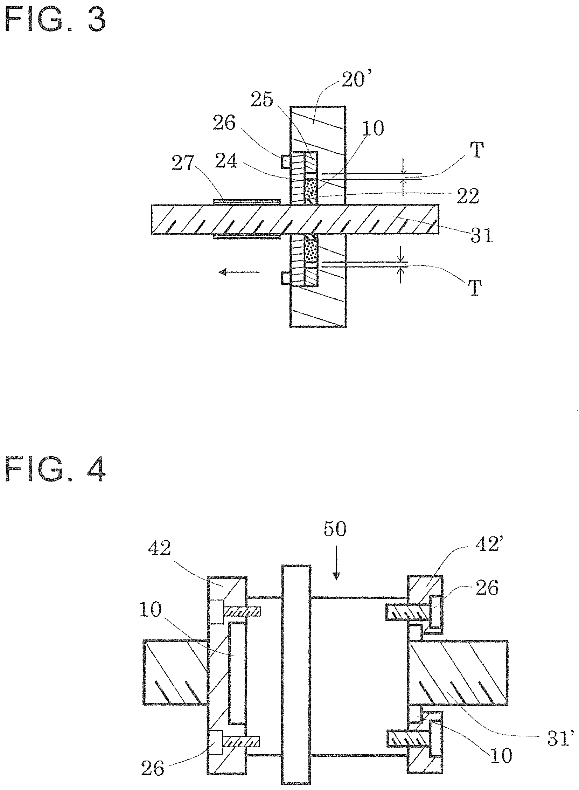

As shown in FIG. 3, as a shaft, a screw shaft 31 of a ball screw was inserted through the sealing material 10. This was accommodated in the sealing material accommodating recess 22 formed in a disc-shaped structure 20' (corresponding to a nut of the ball screw). Then, the sealing material 10 was secured by mounting the sealing retainer 24 thereon and fastening a screw 26. On this occasion, a spacer 25 was disposed on an outer peripheral side in the sealing material accommodating recess 22, and an adjustment was made so that compressibility of the sealing material 10 reached 2%. A clearance T was left between the sealing material 10 and the spacer 25 in order to avoid compression in an outer peripheral direction.

Subsequently, a grease 27 having a red ink mixed therein was applied to the surface of the screw shaft 31, and the structure 20' was moved forward in an arrowed direction shown in FIG. 3 by rotating the screw shaft 31. A removal rate of the grease 27 from the shaft 30 when the structure 20' made one pass over a coated part of the grease 27 was photographed with an image analysis camera, and sealing property of the sealing material 10 was measured.

The sealing property was evaluated as follows. That is, a residual volume of the grease 27 on the screw shaft 31 was analyzed from an image taken by the image analysis camera. The evaluation was made that the sealing property was 100% when nothing remained. The results are presented in Table 1.

### (Torque Test)

As shown in FIG. 4, the sealing material 10 was inserted through a screw shaft 31' of a ball screw, and was brought into contact with both surfaces of a structure 50 (corresponding to a nut). Sealing retainers 42, 42' were mounted from an outer surface of the sealing material 10. The sealing material 10 was secured by fastening the sealing retainer 42 by a screw 26 or the like. On this occasion, the sealing material 10 was in a state of being compressed 2% in a thickness direction without being compressed in an outer diameter direction.

Subsequently, the screw shaft 31 was rotated at 100 rev/min, and a generated load was detected by a load cell (not shown) attached to the screw shaft 31. The results are presented in Table 1.

**[Table 1]**

| | Hardness (Hs) | Density (kg/m³) | Sealing Property (%) | Torque (Nm) |
|---|---|---|---|---|
| Comperative Example | 68.3 | 1.212 | 52.9 | 0.036 |
| Example | 65.0 | 1.161 | 52.8 | 0.030 |
| Rate of Change | 95.2 | 95.8 | 99.8 | 83.3 |

A rate of change was found from (Example/Comparative example)×100.

As presented in Table 1, because the elastic integument layer was composed of a foam elastic body having a porous structure, the sealing material of Example had hardness and density, each of which was lowered by approximately 5%, and the torque exerted on the shaft was also reduced by approximately 17% than that of a normal elastic body of Comparative Example. There was no significant difference in sealing property between Example and Comparative Example. This shows that the torque is reducible while maintaining sealing property.

### DESCRIPTION OF THE REFERENCE NUMERAL

- 3: shaft insertion hole
- 4: foreign matter
- 10: sealing material
- 11: sliding layer
- 12: elastic integument layer
- 20, 20': structure
- 21: hole
- 22: sealing material accommodating recess
- 24: sealing retainer
- 25: spacer
- 26: screw
- 27: grease
- 30: shaft
- 31: screw shaft (shaft)
- 42, 42': sealing retainer
- 43: sealing material accommodating recess
- 50: structure
- 51: shaft insertion hole
- 52: shaft insertion hole

## Claims

1. A sealing material for sealing between a hole of a structure and a shaft inserted into the hole, the sealing material comprising:
a sliding layer having a ring shape or cylindrical shape whose inner peripheral surface slides with the shaft during movement of the shaft relative to the structure, the sliding layer comprising a fiber and an elastomer integrated with each other; and
an elastic integument layer which is laminated on an outer peripheral surface side of the sliding layer, and has a porous structure.

2. The sealing material according to claim 1, wherein the elastic integument layer is one which is obtainable by foaming an elastomer material identical to the elastomer in the sliding layer.

3. The sealing material according to claim 1 or 2, wherein the elastic integument layer is formed integrally with the sliding layer.

4. The sealing material according to any one of claims 1 to 3, wherein the fiber in the sliding layer is used in a form of a fabric material.

5. The sealing material according to claim 4, wherein the sliding layer is formed by impregnating the fabric material with the elastomer.

6. The sealing material according to any one of claims 1 to 3, wherein the fiber in the sliding layer is a short fiber blended into the elastomer.

7. A sealing mechanism in which a sealing material according to any one of claims 1 to 6 is attached in a closely contact manner into a shaft insertion port in a hole of a structure, or to an outer peripheral edge of a shaft insertion port.

8. The sealing mechanism according to claim 7, wherein the sealing material is pressedly fixed to the hole side by a seal retainer being attached to an outside of the structure.
